(19) Europäisches Patentamt
European Patent Office
Office européen des brevets

(11) **EP 1 766 327 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
*G01B 11/14* *(2006.01)*   *G01B 21/16* *(2006.01)*
*G01B 15/00* *(2006.01)*

(21) Anmeldenummer: **05767914.4**

(22) Anmeldetag: **04.07.2005**

(86) Internationale Anmeldenummer:
**PCT/EP2005/053157**

(87) Internationale Veröffentlichungsnummer:
**WO 2006/005690 (19.01.2006 Gazette 2006/03)**

(54) **BESTIMMUNG DES SPALTMASSES EINES RADIALSPALTES**

DETERMINING THE SIZE OF A RADIAL GAP

DÉTERMINATION DE LA MESURE D'UN INTERSTICE RADIAL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.07.2004 EP 04016357**

(43) Veröffentlichungstag der Anmeldung:
**28.03.2007 Patentblatt 2007/13**

(73) Patentinhaber: **SIEMENS AKTIENGESELLSCHAFT
80333 München (DE)**

(72) Erfinder:
• **PFEIFER, Uwe
12557 Berlin (DE)**
• **ZIDORN, Michael
14532 Stahnsdorf (DE)**

(56) Entgegenhaltungen:
EP-A- 0 492 381      DE-A- 2 730 508
DE-C- 19 601 225      US-A- 4 326 804
US-A- 4 384 819

## Beschreibung

Die Erfindung betrifft ein Verfahren und eine Vorrichtung zur Bestimmung des Spaltmaßes eines Radialspaltes zwischen rotierenden und drehfesten Bauteilen, insbesondere zwischen denen einer Strömungsmaschine. Ferner betrifft die Erfindung eine Strömungsmaschine mit einer solchen Vorrichtung.

Strömungsmaschinen, wie z.B. Verdichter oder Turbinen, weisen im Strömungskanal alternierend jeweils in Kränzen angeordnete drehfeste Leitschaufeln und mit dem drehbaren Rotor der Strömungsmaschine fest verbundene Laufschaufeln auf. Die radial äußeren Spitzen der Laufschaufeln bilden mit einer radial außen liegenden Begrenzungsfläche des Strömungskanals Radialspalte. Gleichfalls formen die Spitzen der Leitschaufeln mit der inneren Begrenzungsfläche des Strömungskanals, welcher von der äußeren Fläche des Rotors gebildet wird, Radialspalte. Zur Messung dieser Radialspalte während des Betriebs sind verschiedene Verfahren bekannt.

Die US 4,384,819 beschreibt eine Radialspaltmessung mittels Mikrowellen die von einem rotierenden Bauteil reflektiert werden.

Die US 4,326,804 beschreibt ein Verfahren zur Radialspaltmessung zwischen dem Führungsring und den Laufschaufeln einer Turbine. An jeder Laufschaufelspitze ist ein Licht reflektierendes Mittel vorgesehen, das einen Mess-Lichtstrahl, vorzugsweise Laserlicht, reflektiert. Über ein Linsensystem wird der jeweils reflektierte Lichtstrahl auf einen Lichtpunktpositionsdetektor gelenkt. Dessen Fokus erscheint in Abhängigkeit des Radialspalts im Detektor an einer Positionen, aus der der Radialspalt bestimmt wird. Dabei wird für jede Laufschaufel pro Umlauf eine Messung vorgenommen.

Außerdem ist aus der DE 27 30 508 ein optisches Verfahren zur Bestimmung des Abstandes zwischen einem feststehenden und einem rotierendem Bauelement bekannt. Aufgrund eines von einer Lichtquelle ausgesandten, kegeligen Lichtstrahls projiziert dieser in Abhängigkeit des Spaltmaßes auf einem lichtintensiven Empfänger einen unterschiedlich großen Lichtfleck, welcher zur Abstandsmessung ausgewertet wird.

Zudem offenbart die Patentschrift DE 196 01 225 C1 eine Vorrichtung zur Radialspalt-Überwachung einer Turbine, bei der auf einer Turbinenschaufel ein Messbezugspunkt zur Reflexion von Licht vorgesehen ist, welches von einer durch das Turbinengehäuse geführten Glasfaser-Sonde auf den Messbezugspunkt gerichtet ist. Beim Betrieb der Turbine werden die aktuell erfassten Intensitätsdifferenzen zwischen ausgesendetem und empfangenem Licht mit den bei einer Referenzmessung ermittelten Intensitätsdifferenzen verglichen und aus der Abweichung der Intensitätsdifferenz zwischen aktueller Messung und Referenz die Größe des Radialspaltes berechnet.

Ferner ist aus der EP 492 381 A2 ein Verfahren zur Spitzenspielmessung an Turbinenschaufeln mit einem optischen Sender und Empfänger bekannt, wobei der Empfänger das von den Turbinenschaufeln reflektierte Licht empfängt und dabei den zeitlichen Reflexions-Intensitäts-Verlauf auswertet.

Diese Verfahren basieren auf der Platzierung eines Senders und eines als Sensor ausgebildeten Empfängers im ruhenden System, z.B. in der äußeren Begrenzungswand oder im Gehäuse, um unter Nutzung optischer Effekte das rotierende und somit am Empfänger oder an der Sensorspitze vorbeilaufende Bauteil zu erkennen, bzw. den Abstand dazu in diesem Augenblick zu bestimmen.

Allgemein sind diese Verfahren dadurch gekennzeichnet, dass die eingesetzten Empfänger bzw. Sensoren nicht unter eine bestimmte Grenze miniaturisiert werden können und somit eine nicht zu vernachlässigende Masse besitzen. Ferner benötigen einige Verfahren eine aufwändige Speise- bzw. Sende-Elektronik.

Diese Sensoren können nicht an der Spitze einer freistehenden Leitschaufel einer Strömungsmaschine montiert werden, da ein derartiger Sensor das Eigenschwingungsverhalten der Leitschaufeln negativ beeinflussen würde. Diese könnte beim Betrieb zum Schwingen angeregt werden, was die Lebensdauer der Schaufel vermindert.

Eine Anordnung von Sensoren im rotierenden System ist häufig nicht möglich oder erfordert einen ungerechtfertigten hohen Einsatz, um die meist aufwändige Elektronik zu versorgen. Sind Sensoren, oder insbesondere Empfänger, im rotierenden System vorgesehen, kann für die Informationsausleitung aus dem rotierenden System eine kostenintensive und störanfällige Telemetrie-Anlage erforderlich sein, was den allgemeinen Aufwand erhöht.

Aufgabe der Erfindung ist es, ein kostengünstiges und zuverlässiges Verfahren und eine Vorrichtung zur Bestimmung des Spaltmaßes eines Radialspaltes zwischen rotierenden und drehfesten Bauteilen anzugeben, welches Sensoren mit vergleichsweise geringer Masse und geringen Volumen aufweist.

Ferner sollte die Vorrichtung und das Verfahren allgemeinen Anforderungen wie z.B. eine Unempfindlichkeit gegenüber Druck und Temperatur aufweisen, einen großen Arbeitsbereich, d.h. Dynamik, bezüglich der Einsatztemperatur sowie der Drehzahl aufweisen und/oder justage- bzw. kalibrierungsfrei sein. Eine weitere Aufgabe der Erfindung ist es, die Verwendung einer solchen Vorrichtung zur Überwachung des Radialspalts anzugeben.

Die auf das Verfahren gerichtete Aufgabe wird durch die Merkmale des Anspruchs 1 oder durch die des Anspruchs 2 gelöst. Ferner wird die auf die Vorrichtung gerichtete Aufgabe durch die Merkmale des Anspruchs 8 oder durch die Merkmale des Anspruchs 11 gelöst. Die letztgenannte Aufgabe wird durch die Merkmale des Anspruchs 18 gelöst. Vorteilhafte Ausgestaltungen sind jeweils in den Unteransprüchen angegeben.

Eine Lösung der auf das Verfahren gerichteten Aufgabe sieht vor, dass zur Bestimmung des Spaltmaßes eines Radialspaltes zwischen rotierenden und drehfesten Bauteilen, insbesondere zwischen den einer Strömungsmaschine, ein von einer an der Oberfläche des rotierenden Bauteils angeordnete Sende-Einrichtung als Radiowelle abgestrahltes Ursprungssignal von einer auf dem drehfesten Bauteil angeordneten Empfangs-Einrichtung empfangen und an eine Auswerte-Einrichtung weitergeleitet wird, welche Auswerte-Einrichtung aus dem Empfangssignal durch die Bestimmung der Parameter der Bahnkurve (Trajektoriebestimmung) der rotierenden Sende-Einrichtung das Spaltmaß des Radialspaltes bestimmt und anzeigt.

Eine andere Lösung der auf das Verfahren gerichteten Aufgabe sieht vor, dass zur Bestimmung des Spaltmaßes eines Radialspaltes zwischen rotierenden und drehfesten Bauteilen, insbesondere zwischen den einer Strömungsmaschine, ein von einer an dem drehfesten Bauteil angeordneten Sende-Einrichtung als Radiowelle abgestrahltes bzw. ausgesendetes Ursprungssignal von einer auf dem rotierenden Bauteil angeordneten Reflektions-Struktur verändert reflektiert wird, so dass dieses als Empfangssignal von einer auf dem drehfesten Bauteil angeordneten Empfangs-Einrichtung empfangen und an eine Auswerte-Einrichtung weitergeleitet wird, welche Auswerte-Einrichtung aus dem Empfangssignal dessen Veränderung gegenüber dem Ursprungssignal zur Bestimmung der Parameter der Bahnkurve (Trajektoriebestimmung) der rotierenden Reflektions-Struktur auswertet, um das Spaltmaß des Radialspaltes zu bestimmen und anzuzeigen.

Den beiden Lösungen liegt der eine erfinderische Gedanke zu Grunde, dass durch die Bestimmung der Parameter der Bahnkurve eines auf dem rotierenden Bauteil angeordneten definierten Punktes, d.h. durch dessen Trajektoriebestimmung, das Spaltmaß des Radialspaltes bestimmt werden kann. Hierzu dient die Lage der Empfangs-Einrichtung als feststehender Referenzpunkt.

Zumindest zeitweise wird die sich jederzeit ändernde Distanz zwischen dem rotierenden definierten Punkt, welcher die auf dem rotierenden Bauteil angeordnete Sende-Einrichtung einerseits oder die Reflektions-Struktur andererseits sein kann, und der Position der Empfangs-Einrichtung als feststehender Referenzpunkt in Abhängigkeit von dem Drehwinkel des rotierenden Bauteils erfasst. Ein Funktionsgraph des Betrages der Distanz in Abhängigkeit vom Drehwinkel wird durch die Auswerte-Einrichtung (Trajektoriebestimmung) abgeleitet, aus dem der gewünschte Parameter, nämlich der minimale Abstand zwischen der rotierenden Sende-Einrichtung und der drehfest angeordneten Empfangs-Einrichtung bestimmt wird, welcher dem Radialspalt zwischen rotierendem und drehfestem Bauteil entspricht.

Radiowellen weisen gegenüber optischen Wellen den Vorteil auf, dass sie mit vergleichsweise einfachen elektronischen Bauteilen erzeugt, weitergeleitet, abgestrahlt, empfangen und weiter verarbeitet werden können. Außerdem wird durch den Einsatz von Radiowellen ein besonders großer Einsatzbereich, d.h. Dynamik, erreicht.

In einer vorteilhaften Ausgestaltung sind die Signale hochfrequente (HF) elektromagnetische Radiowellen mit einer Frequenz im Bereich zwischen 0,5 MHz und 100 GHz, insbesondere mit einer Frequenz im Bereich von 100 MHz bis 10 GHz. Durch die Verwendung von elektromagnetischen Radiowellen ist eine generelle Unabhängigkeit gegenüber dem im Radialspalt befindlichen Medium gegeben. Außerdem sind für elektromagnetische Radiowellen vergleichsweise kleine und massearme Sende-/Empfangs-Bauteilelemente mit einer hohen Auflösung, Dynamik, kostengünstig verfügbar, welche bei hohen Drehzahlen, wie sie z.B. beim Betrieb einer Strömungsmaschine auftreten, eine differenzierende Messung des Radialspaltes ermöglichen.

Gemäß einer weiteren vorteilhaften Ausgestaltung wertet die Auswerte-Einrichtung zur Bestimmung der Distanz zwischen rotierendem Punkt und Referenzpunk die Feldstärke bzw. die Intensität des Empfangssignals aus. Die umlaufende, d.h. rotierende, Sende-Einrichtung als definierter Punkt nähert und entfernt sich periodisch auf ihrer Kreisbahn der feststehenden Empfangs-Einrichtung, so dass in Abhängigkeit von der Distanz der beiden Einrichtungen zueinander eine sich stetig verändernde Feldstärke bzw. Intensität des Empfangssignals von der Empfangs-Einrichtung aufgenommen wird. Dabei ist die Feldstärke bzw. die Intensität des Empfangssignals an der Stelle am stärksten, wo sich Sende- und Empfangs-Einrichtung unter Bildung der kleinstmöglichen Distanz gegenüberliegen. Bei der Anwendung von elektromagnetischen Wellen als Signale wird die Feldstärke ausgewertet.

Anstelle der Sende-Einrichtung kann auf dem rotierenden Bauteil eine Reflektions-Struktur vorgesehen sein, die ein von der nun drehfest montierten Sende-Einrichtung als Radiowelle abgestrahltes Ursprungssignal zu der drehfest montierten Empfangs-Einrichtung reflektiert und dabei eine Manipulation, d.h. Veränderung des Ursprungssignals, herbeiführt, welche von der Auswerte-Einrichtung erkannt wird. Die Auswerte-Einrichtung ist weiterhin analog zur ersten Lösung ausgestattet.

Die Trajektoriebestimmung, d.h. die Parameter der Bahnkurve eines definiertes Punktes auf einer rotierenden Kreisbahn kann alternativ bestimmt werden, in dem anstelle der Intensitäts- bzw. Feldstärkemessung die durch den Doppler-Effekt hervorgerufene Frequenzverschiebung des Empfangssignals ausgewertet wird. Bei einer beweglichen Sende-Einrichtung wird das von ihr als Radiowelle ausgesendete Ursprungssignal durch den Doppler-Effekt moduliert.

Gemäß einem vorteilhaften Vorschlag filtert die Auswerte-Einrichtung die Dopplerfrequenz, d.h. die Differenzfrequenz des Empfangssignals durch Frequenzdemodulation aus dem Empfangssignal heraus. Basierend auf der zeitlichen Dauer der Änderung der Differenzfrequenz kann daraus das Spaltmaß des Radialspaltes bestimmt werden.

Die erste Lösung der auf die Vorrichtung gerichteten Aufgabe sieht vor, dass zum Durchführen des Verfahrens nach einem der Ansprüche 1 oder 3 bis 7, zur Bestimmung des Radialspaltes zwischen rotierenden und drehfesten Bauteilen, insbesondere zwischen den einer Strömungsmaschine, auf dem rotierenden Bauteil eine hochfrequente Radiowellen ausstrahlende Sende-Einrichtung und auf dem drehfesten Bauteil eine hochfrequente Radiowellen empfangende Empfangs-Einrichtung angeordnet ist, welche mit einer Auswerte-Einrichtung in Kommunikationsverbindung steht.

In einer vorteilhaften Ausgestaltung der Vorrichtung ist die Sende-Einrichtung mittels einer induktiven Kopplung von dem drehfesten Bauteil aus mit Energie versorgbar. Alternativ dazu kann die Sende-Einrichtung durch eine ebenfalls auf dem rotierenden Bauteil angeordnete Batterie mit Energie versorgbar sein. Hierdurch ist eine kontaktlose und somit verschleißfreie Versorgung der Sende-Einrichtung mit Energie möglich. Aufgrund der Ausgestaltung der sparsamen Sende-Einrichtung reicht die Kapazität einer Batterie aus, um die Sende-Einrichtung über mehrere Jahre mit Energie zu versorgen, bis z.B. die Wartung der Strömungsmaschine das Freilegen des Rotors und somit das Austauschen der Batterie ermöglicht.

Eine zweite Lösung der auf die Vorrichtung gerichteten Aufgabe sieht vor, dass zum Durchführen des Verfahrens nach einem der Ansprüche 2 bis 7, zur Bestimmung des Radialspaltes zwischen rotierenden und drehfesten Bauteilen, insbesondere zwischen den einer Strömungsmaschine, auf dem rotierenden Bauteil eine Reflektions-Struktur, von der hochfrequente Radiowellen empfangbar und ausstrahlbar sind, sowie auf dem drehfesten Bauteil eine hochfrequente Radiowellen verarbeitende Sende- und Empfangs-Einrichtung angeordnet ist, welche Empfangs-Einrichtung mit einer Auswerte-Einrichtung in Kommunikationsverbindung steht.

Zweckmäßigerweise ist die Reflektions-Struktur durch einen auf einer isolierten Trägerschicht angeordneten Dipol mit einer HF-Diode gebildet, welcher vorzugsweise als nicht linearer passiver Dipol ausgebildet ist. Der Dipol empfängt das von der Sende-Einrichtung abgestrahlte Ursprungssignal und sendet mittels der HF-Diode eine elektromagnetische Welle mit annähernd doppelter Frequenz zurück, welche darüber hinaus durch die Rotation mit dem Doppler-Effekt moduliert wird. Die Empfangs-Einrichtung filtert aus dem EmpfangsSignal die elektromagnetische Welle mit der doppelten Sendefrequenz heraus und leitet diese an die Auswerte-Einrichtung weiter. Dadurch werden die von einer metallischen bzw. ebenen Oberfläche des rotierenden Bauteils ohnehin reflektierten elektromagnetischen Wellen ignoriert, welche die gleiche Frequenz aufweisen wie das Ursprungssignal. Die Einrichtungen arbeiten mit Radiowellen, deren Frequenzen im Bereich zwischen 0,5 MHz und 100 GHz, vorzugsweise 100 MHz und 10 GHz liegen.

Eine möglichst koaxiale Anordnung der Sende- und Empfangs-Einrichtung kann erreicht werden, wenn die Sende- und die Empfangs-Einrichtung jeweils eine Sende- bzw. Empfangs-Antenne umfasst, welche eine Punktstrahl- bzw. eine Linienstrahl-Charakteristik aufweist.

Die Lösung der auf die Verwendung gerichteten Aufgabe schlägt die Erfindung vor, dass eine Strömungsmaschine mit einer Vorrichtung nach einem der Ansprüche 9 bis 13 oder 14 bis 17 ausgestattet ist, in der ein Verfahren nach einem der Ansprüche 1 - 7 durchführbar ist. Hierdurch können Radialspalte der als vorzugsweise stationäre Gasturbine ausgebildeten Strömungsmaschine überwacht werden, welche insbesondere bei einem Warmstart der Strömungsmaschine kritische Werte annehmen können. Ferner kann eine zur Wirkungsgradsteigerung durchgeführte axiale Verschiebung des Rotors einer Strömungsmaschine, welche einen konischen Strömungskanal aufweist, besonders exakt durchgeführt werden. Das Strömungsmedium der Strömungsmaschine wird dadurch bestimmungsgemäß an den Laufschaufeln der Strömungsmaschine vorbeigeführt, wobei die über die Schaufelspitzen durch den Radialspalt hervorgerufenen Strömungsverluste im Strömungsmedium minimiert werden können.

Die Erfindung wird anhand einer Zeichnung erläutert. Dabei zeigt:

Fig. 1   schematisch eine Messanordnung zur Bestimmung der Parameter der relativen Bahnkurve eines rotierenden Punktes,

Fig. 2   ein Diagramm der Distanzfunktion $s = f(\varphi)$,

Fig. 3   ein Diagramm der Geschwindigkeitsfunktion $ds/d(\varphi)$,

Fig. 4   die Differenz-Frequenz eines durch den Doppler-Effekt modulierten Schallwellensignals einer bewegten Sende-Einrichtung,

Fig. 5   die Differenz-Frequenz eines durch den Doppler-Effekt modulierten elektromagnetischen HF-Signals einer bewegten Sende-Einrichtung,

Fig. 6   eine schematische Darstellung einer als Gasturbine ausgebildeten Strömungsmaschine,

Fig. 7   eine erfindungsgemäße Vorrichtung zur Bestimmung des Spaltmaßes des Radialspaltes und

Fig. 8   eine alternativ ausgebildete, erfindungsgemäße Vorrichtung zur Bestimmung des Radialspaltes.

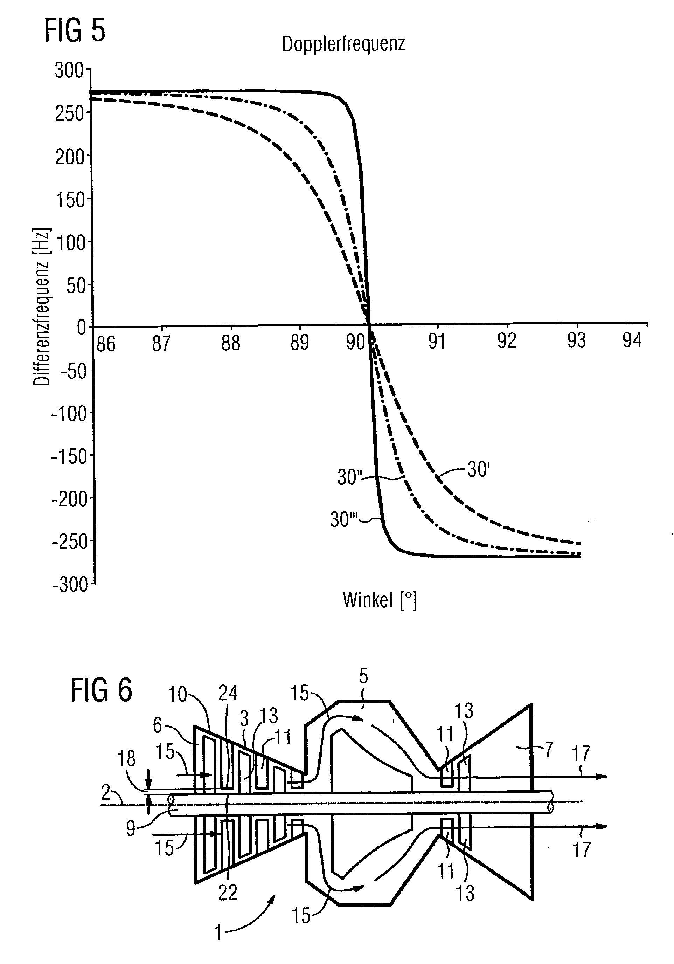

Fig. 6 zeigt eine erfindungsgemäße Strömungsmaschine 1 als Gasturbine mit einem Verdichter 3, einer Brennkammer 5 und einer Turbineneinheit 7. Im Verdichter 3 sind an dem Rotor 9 der Gasturbine Laufschaufeln 13 angeordnet, die mit am Gehäuse 10 befestigten Leitschaufeln 11 den angesaugten Luftstrom 15 im Strömungskanal 6 verdichten. In der Brennkammer 5 wird der verdichtete Luftstrom 15 unter Zugabe eines Brennmittels zu einem Heißgas 17 verbrannt, welches sich in der Turbineneinheit 7 an den Leitschaufeln 11 und an den Laufschaufeln 13 arbeitsleistend entspannt. Dabei wird der Rotor 9 angetrieben, welcher neben dem Verdichter 3 auch eine Arbeitsmaschine, z.B. einen elektrischen Generator antreibt.

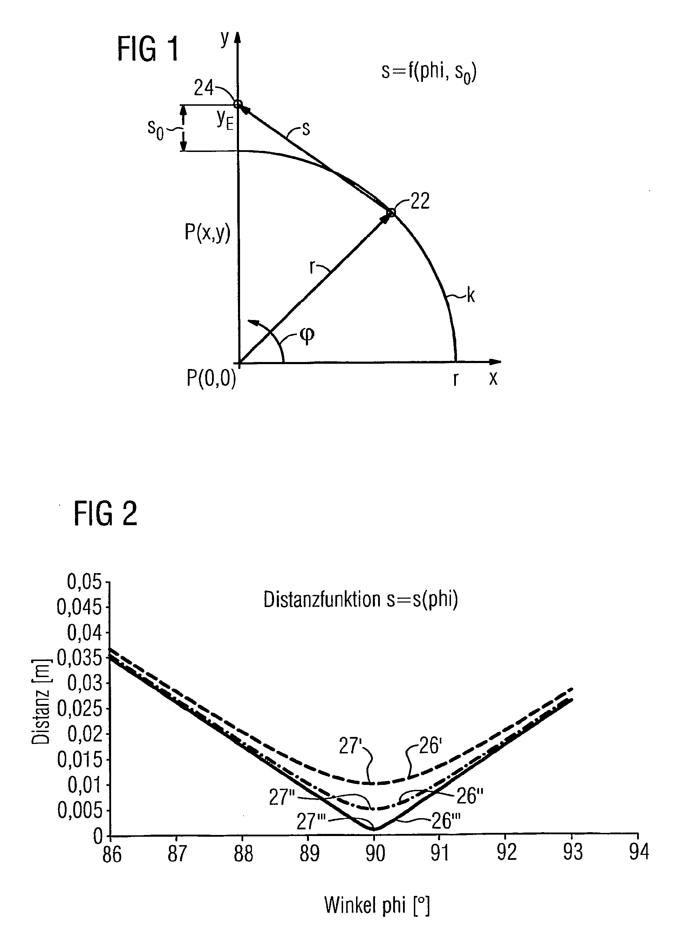

Fig. 1 zeigt einen Ausschnitt der Messanordnung des vorgeschlagenen Trajektorieverfahrens. Um den Koordinatenursprung P(0,0) des kartesischen Koordinatensystems P(x,y), durch den die Drehachse 2 des Rotors 9 der Gasturbine verläuft, rotiert mit einem Radius r eine Sende-Einrichtung 22 auf einer Kreisbahn K. Die Sende-Einrichtung 22 kann beispielsweise an der Oberfläche des Rotors 9 angeordnet sein, welche die innere Begrenzungsfläche für den Strömungskanal 6 der Gasturbine bildet.

Eine drehfest angeordnete Empfangs-Einrichtung 24 liegt dabei außerhalb der Kreisbahn K, z.B. an dem freien Ende einer freistehenden Leitschaufel 11 der Gasturbine, welche der inneren Begrenzungsfläche unter Bildung eines Radialspaltes 18 (Fig. 6) gegenüberliegt.

Die Distanz s zwischen der sich stetig verändernden Position der Sende-Einrichtung 22 und der Empfangs-Einrichtung 24 wird zumindest zeitweise ermittelt. Der minimale Betrag der Distanz s ist der zu überwachende und zu bestimmende Abstand $s_0$, welcher bei der Gasturbine als Spaltmaß des Radialspaltes 18 zwischen drehfesten und rotierenden Bauteilen zu bestimmen ist.

Bei der Rotation des Rotors 9 mit konstanter Winkelgeschwindigkeit ergibt sich für die zeit- und ortsaufgelöste Distanz s eine funktionale Abhängigkeit vom Drehwinkels des Rotors 9 und vom Abstand $s_0$:

$$s = f(\varphi, s_0), \qquad\qquad (1)$$

welche im Diagramm der Fig. 2 zumindest teilweise dargestellt ist. Der betrachtete Ausschnitt des Drehwinkels erstreckt sich von 86° bis 94° unter der Annahme, dass die Position der an der freistehenden Leitschaufel befestigten Empfangs-Einrichtung 24 im Punkt $P(0,y_E)$ liegt, d.h. dass die Empfangs-Einrichtung 24 auf der Ordinate angeordnet ist.

Bei einer Messanordnung mit einem Radius r = 0,5m des Rotors 9 zeigt die Fig. 2 die Abhängigkeit der Distanz s von dem Drehwinkels für drei unterschiedliche Abstände $s_0$, so dass sich drei unterschiedliche relative Bahnkurven ergeben. Die drei daraus resultierenden Distanz-Funktionsgraphen 26 sind in Fig. 2 dargestellt. Jeder Distanz-Funktionsgraph 26 weist bei einem Winkel von $\varphi$ = 90° ein relatives Minimum 27 der ermittelten Bahnkurve der Sende-Einrichtung 24 auf.

Da der Abstand $s_0$ beim Betrieb gemessen werden soll, ist es zweckmäßig, nicht die Distanz s, sondern die Geschwindigkeit der Sende-Einrichtung 24 durch die erste Ableitung $ds/d(\varphi)$ der Distanz s zu messen.

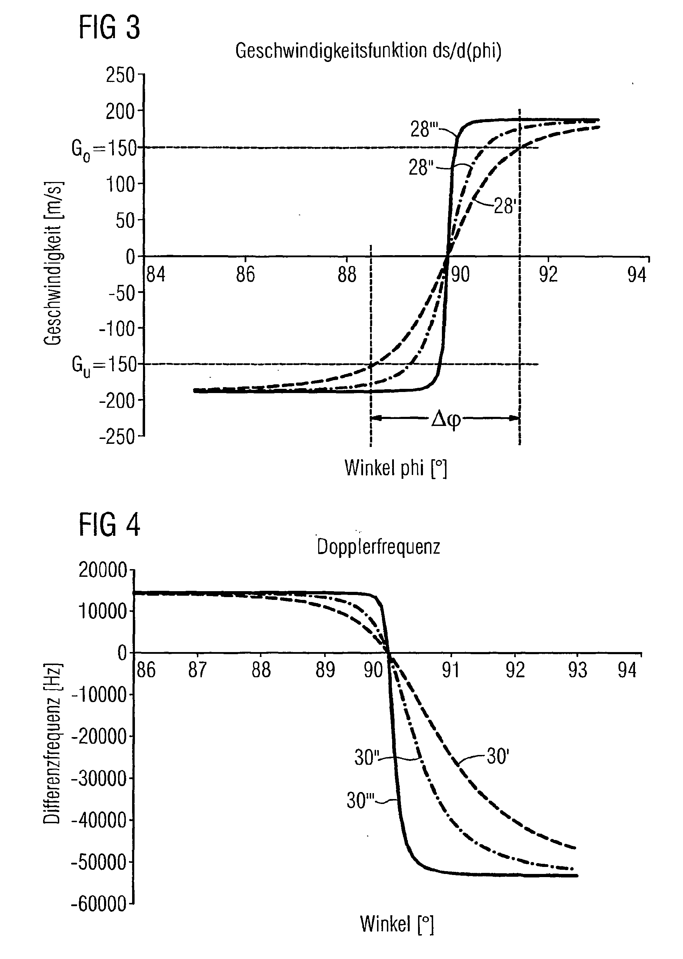

Die erste Ableitung der in Fig. 2 dargestellten DistanzFunktion ist als Geschwindigkeits-Funktion in Fig. 3 dargestellt. Je nach vorhandenem minimalem Abstand $s_0$ sind die Anstiege der Geschwindigkeits-Funktionsgraphen 28 unterschiedlich steil. Die Geschwindigkeits-Funktionsgraphen 28 flachen um so mehr ab, je größer der minimale Abstand $s_0$ zwischen der Sende-Einrichtung 22 und der Empfangs-Einrichtung 24 bei einem Winkel von $\varphi$ = 90° ist.

Durch die Ermittelung eines nötigen Verdrehwinkels $\Delta\varphi$, bei der der Geschwindigkeits-Funktionsgraph 28 innerhalb eines von einer unteren Geschwindigkeitsgrenze $G_u$ und einer oberen Geschwindigkeitsgrenze $G_o$ definierten Intervalls $[G_u, G_o]$ liegt, kann das Spaltmaß bestimmt werden. Der so ermittelte Verdrehwinkel $\Delta\varphi$ ist zu dem Spaltmaß des Radialspaltes 18, sprich dem Abstand $s_0$, proportional. Durch die konstante Winkelgeschwindigkeit der Rotors 9, die zur Stromerzeugung mit stationären Strömungsmaschinen zwingend erforderlich ist, kann der Verdrehwinkel $\Delta\varphi$ mittels einer linearen Umrechnung in eine Zeitdauer umgerechnet werden.

Zur Distanzmessung können verschiedene Signalformen, d.h. Trägermedien, und verschiedene Detektionsverfahren eingesetzt werden. Als Trägermedien dienen Schall- bzw. Ultraschallwellen oder elektromagnetische Radiowellen. Als Detektionsverfahren kann die Intensitätsmessung bei Schallwellen einerseits oder die Feldstärkemessung bei elektromagnetischen Radiowellen andererseits eingesetzt werden. Darüber hinaus kann als Detektionsverfahren für beide Trägermedien der Doppler-Effekt genutzt werden.

Anhand des Doppler-Effekts wird das Detektionsverfahren nachfolgend beschrieben.

Fig. 4 zeigt die aus dem Empfangssignal herausgefilterten Differenz-Frequenzen beim Einsatz von ultraschallbasierten Sende- und Empfangs-Einrichtungen 22, 24. Wird z.B. mit einer Sende-Frequenz von $f_0$ = 40kHz, einem Radius von r = 0,5m und einer Drehzahl von n = 3600min$^{-1}$ unter Verwendung der ultraschallbasierten Sende- und Empfangs-Einrichtungen der Radialspalt ermittelt, so ist erkennbar, dass ein nutzbares und differenzierbares Empfangssignal nur im Bereich des Verdrehwinkel von $\Delta\varphi \approx \pm 2°$ zu erwarten ist. Bei einer Sende-Frequenz von $f_0$ = 40kHz fallen dadurch aber nur ca. 4 - 6 Schwingungen in dieses Intervall, wodurch eine genügend genaue Differentation der Dopplerfrequenz-Funktionsgraphen 30 für die Anwendung in einer Strömungsmaschine mit einer Drehzahl von n = 3600min$^{-1}$ nur bedingt möglich ist. Sind Radialspalte 18 bei geringeren Drehzahlen zu überwachen, so kann der kostengünstige Einsatz von ultraschallbasierten Sende- und Empfangs- Einrichtungen 22, 24 ausreichend sein.

Unter der Annahme einer konstanten Wellenausbreitungsgeschwindigkeit zeigt die Betrachtung der Doppler-Gleichung

$$f = \frac{f_o}{\left(1 - \dfrac{v}{c}\right)} \qquad\qquad (2)$$

bei Annäherung und

$$f = \frac{f_o}{\left(1 + \dfrac{v}{c}\right)} \qquad\qquad (3)$$

beim Entfernen,

dass der zu erwartende Frequenzhub, d.h. das Frequenzintervall, in dem die zu erwartenden Differenz-Frequenzen liegen, proportional zur Sende-Frequenz ist. Eine möglichst hohe Sende-Frequenz ist somit günstig, um ein besonders gut auswertbares Empfangssignal zu erhalten.

Wird anstelle der ultraschallbasierten Sende- und Empfangs-Einrichtung eine hochfrequenten (HF) Sende- und Empfangs-Einrichtung eingesetzt, z.B. mit einer Sendefrequenz von $f_0$ = 435MHz, ist eine genügend genaue Differentation des von der Auswerte-Einrichtung ermittelten Dopplerfrequenz-Funktionsgraphens 30 möglich. Folglich sind in diesem Fall besonders gut auswertbare Dopplerfrequenzen aus dem Empfangssignal herausfilterbar. Für das gewählte Beispiel weisen sie einen Frequenzhub von [-280Hz, 280Hz] auf.

Hierzu zeigt Fig. 5 die Dopplerfrequenz-Funktionsgraphen 30 mit identischen Parametern aus Fig. 4. Aus der Steilheit der jeweiligen Dopplerfrequenz-Funktionsgraphen 30', 30" 30,''' bzw. aus deren Steigungen lässt sich das zugehörige Spaltmaß und somit der Abstand $s_0$ ermitteln.

Die im Beispiel gewählte Sendefrequenz $f_0$ = 435MHz ist für Telemetrie freigegeben. Darüber hinaus sind preiswerte, funktionsoptimierte und miniaturisierte Sende-/Empfangs-Bauelemente als SMD (Surface Mounted Device) kommerziell verfügbar, deren Massen bezogen auf eine freistehende Leitschaufel vernachlässigbar sind. Höhere Frequenzen sind dabei wünschenswert und auch erzielbar.

Die Differenz-Frequenz kann durch Frequenzdemodulation aus dem Empfangssignal gewonnen werden. Die Bestimmung des gesuchten Spaltmaßes kann aus der Ermittlung des Verdrehwinkels $\Delta\varphi$ abgeleitet werden, welcher sich aus der Dauer bestimmen lässt, in der der Differenzfrequenz-Funktionsgraph 30 im Frequenzintervall von [-200Hz, +200Hz] liegt. Zur Signalauswertung kann beispielsweise ein Signalprozessor benutzt werden.

Zweckmäßigerweise ist für die Sende- und Empfangs-Einrichtung 22, 24 eine Reichweite von ca. 20cm ausreichend, so dass nur äußerst geringe Sendeleistungen im Sub-mW-Bereich erforderlich sind. Dem zur Folge ist ein sehr geringer Stromverbrauch der Sende-Einrichtung 22 zu erwarten, was eine Montage im rotierenden System ermöglicht. Die nötige Speiseenergie kann berührungslos (induktiv) in das rotierende System eingekoppelt werden. Alternativ ist auch eine Batterieversorgung mit handelsüblichen Lithiumzellen denkbar, mit denen ausreichende Betriebszeiten erreicht werden können. Ferner wird durch die begrenzte Reichweite lediglich zeitweise der Radialspalt ermittelt.

Es sei darauf hingewiesen, dass anstelle der Differenz-Frequenz auch die Feldstärke eines elektromagnetischen Signals oder die Intensität einer Schallwelle in ähnlicher Art und Weise zur Bestimmung der Distanzfunktion s = $f(\varphi, s_0)$ herangezogen werden kann.

Die technische Umsetzung zur Ermittelung der Distanzfunktion wird im weiteren Verlauf anhand des Doppler-Effekts beschrieben, da dieser unabhängig von der gewählten Signalform auftritt. Nach der Ermittlung des Feldstärkeverlaufs, des Intensitätsverlaufs bzw. der Frequenzverschiebung wird für alle technischen Umsetzungen das Trajektorieverfahren zur Bestimmung des Spaltmaßes angewendet.

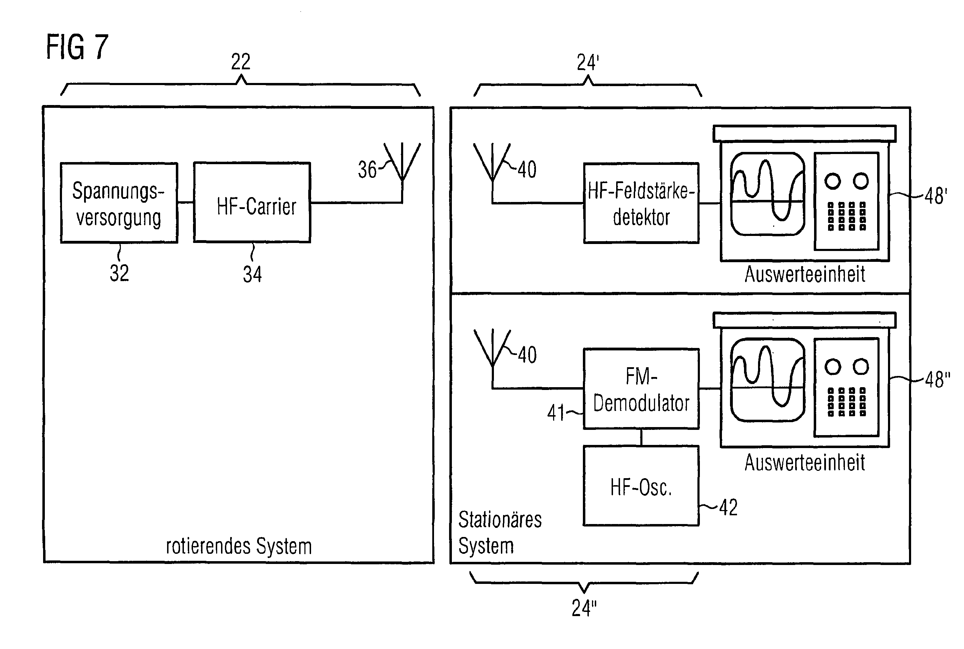

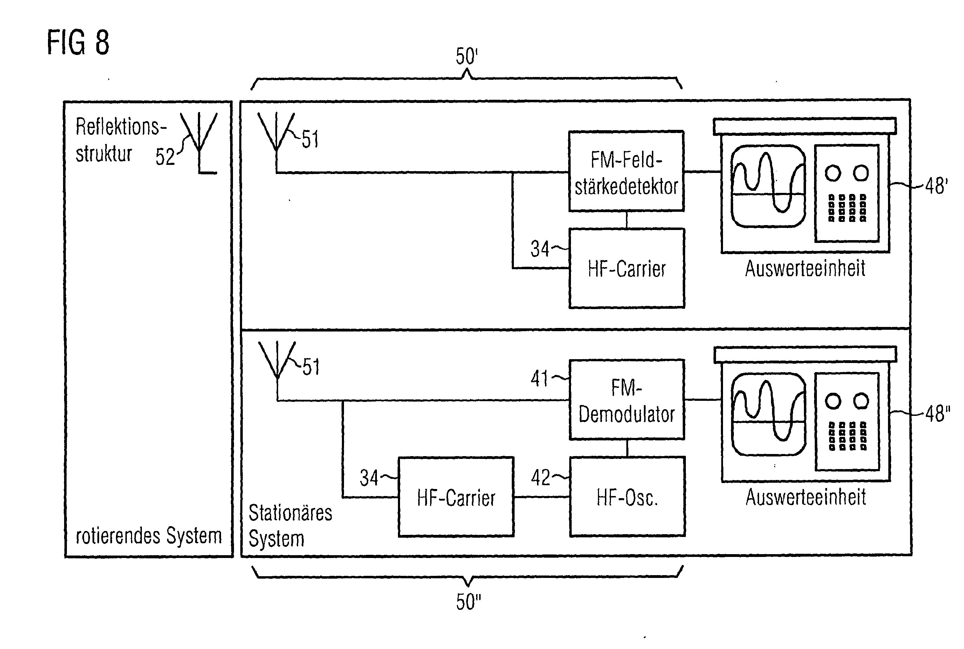

Die Fig. 7 und 8 zeigen schematisch mehrere Aufbauten einer Messkette zur Bestimmung des Spaltmaßes eines Radialspaltes zwischen rotierendem und stationärem System, d.h. zwischen einem rotierenden und stationären Bauteilen.

Fig. 7 zeigt eine Ausgestaltung der Erfindung, bei der die Sende-Einrichtung 22 einschließlich Energieversorgung auf dem rotierenden System, z.B. dem Rotor, angeordnet ist. Die Sende-Einrichtung 22 weist eine Energiequelle 32, einen Frequenzerzeuger 34 und eine Sende-Antenne 36 auf.

Das stationäre System weist seinerseits eine Empfangs-Antenne 40 auf. Basierend auf dem Doppler-Effekt, weist die Empfangs-Einrichtung 24" einen FM-Demodulator 41 und einen HF-Oszillator 42 auf. Wird anstelle des Doppler-Effekts die Feldstärke bzw. die Intensität des Empfangssignals ausgewertet, umfasst die Empfangs-Einrichtung 24' neben der Empfangs-Antenne 40 einen Feldstärkedetektor 43.

Die Empfangs-Einrichtung 24 ist an eine Auswerte-Einrichtung 48 gekoppelt, in der die Trajektoriebestimmung durchgeführt wird.

Eine alternative Ausgestaltung zeigt Fig. 8. Ortsfest ist eine kombinierte Sende- und Empfangs-Einrichtung 50 angeordnet, welche an eine Auswerte-Einrichtung 48 angeschlossen ist.

Wenn die durch den Doppler-Effekt hervorgerufene Differenz-Frequenz zur Bestimmung des Spaltmaßes ausgewertet werden soll, weist die kombinierte Sende- und Empfangs-Einrichtung 50'' neben der Sende- und Empfangs-Antenne 51 einen HF-Oszillator 42, einen Frequenzerzeuger 34 und einen FM-Demodulator 41 auf. Dient als Detektionsverfahren die Feldstärke- bzw. die Intensitätsmessung, umfasst die kombinierte Sende- und Empfangs-Einrichtung 50' einen Frequenzerzeuger 34 und einen Feldstärkedetektor 43.

Um das von der Sende- und Empfangs-Einrichtung 50 abgestrahlte Ursprungssignal mit einer Frequenz $f_S$ durch das rotierende System zu verändern, ist an diesem eine Reflektions-Struktur 52, z.B. ein nicht linearer passiver Dipol mit einer HF-Diode, angeordnet, welcher auf einer die elektromagnetische Radiowelle nicht reflektierenden Isolierschicht bzw. Trägerschicht angeordnet ist. Der Dipol empfängt das Ursprungssignal, sofern dieser sich in der Reichweite der Sende- und Empfangs-Antenne 51 befindet. Der nicht-lineare Dipol verdoppelt mit Hilfe der HF-Diode die Frequenz $f_S$ des empfangenen Ursprungssignals und sendet ein Signal mit doppelter Frequenz $f_E$ als Empfangssignal an die Empfangs-Einrichtung zurück. Durch die auf der Kreisbahn K liegende Bewegung des Dipols wird das zurückgeworfene Signal moduliert, so dass die Sende- und Empfangs-Antenne 51 das frequenzverdoppelte und mit dem Doppler-Effekt modulierte Empfangssignal aufnehmen kann. Die Empfang-Einrichtung 50 extrahiert, d.h. filtert aus dem empfangenen Frequenzspektrum lediglich das Signal mit der verdoppelten Frequenz $f_E$ und leitet dieses an die Auswerte-Einrichtung 48 weiter. Die Auswerte-Einrichtung 48 bestimmt mittels der sich ändernden Feldstärke bzw. mittels der sich ändernden Doppler-Frequenz des Empfangssignals die Parameter der Bahnkurve (Trajektoriebestimmung), aus den sich das Spaltmaß des Radialspalts zwischen dem rotierenden und dem stationären System bzw. Bauteil bestimmen lässt.

Die durch glatte Oberflächen oder durch sonstige Weise entstehenden Reflektionen des Ursprungssignals, welche im wesentlichen die gleiche Frequenz aufweisen wie das Ursprungssignal, werden von der Empfangseinrichtung ignoriert bzw. herausgefiltert.

Die erfindungsgemäßen Vorrichtungen haben den Vorteil, dass sie in einem Temperaturbereich von 0°C bis 450°C einsetzbar sind. Darüber hinaus ist das Detektionsverfahren von der Oberflächenbeschaffenheit, von der geometrischen Beschaffenheit und von den physikalischen Eigenschaften des rotierenden Bauteils unabhängig. Ferner sind die Vorrichtungen justierungsfrei und bedürfen nur nach dem erstmaligen Einbau einer Kalibrierung, die dann für die gesamte Lebensdauer der Vorrichtung genügt.

Aufgrund der vergleichsweise massenarmen und kleinen Sensoren kann so der zwischen der Spitze einer freistehenden Leitschaufel und der Rotornabe existierende Radialspalt gemessen werden. Natürlich ist auch eine Verwendung denkbar, bei der an der Spitze einer Laufschaufel, freistehend oder mit Deckband, eine Reflektions-Struktur oder eine Sende-Einrichtung vorgesehen ist, und zumindest die Empfangs-Antenne der Empfangs-Einrichtung an der äußeren Begrenzungsfläche vorgesehen ist.

Wenn z.B. jede Laufschaufel eines Laufschaufelkranzes eine Sende-Einrichtung aufweist, und/oder über den Umfang mehrere Empfangs-Antennen verteilt sind, kann eine weiter verbesserte bzw. an mehreren Orten gleichzeitige Bestimmung des Spaltmaßes erfolgen.

**Patentansprüche**

1. Verfahren zur Bestimmung des Spaltmaßes eines Radialspaltes (18) zwischen rotierenden und drehfesten Bauteilen, insbesondere zwischen denen einer Strömungsmaschine (1),

   bei dem ein von einer an der Oberfläche des rotierenden Bauteils angeordneten Sende-Einrichtung (22) als Radiowelle abgestrahltes Ursprungssignal von einer auf dem drehfesten Bauteil angeordneten Empfangs-Einrichtung (24) verändert empfangen und an eine Auswerte-Einrichtung (48) weitergeleitet wird,

   welche Auswerte-Einrichtung (48) aus dem Empfangssignal durch die Bestimmung der Parameter der Bahnkurve, also durch die Trajektoriebestimmung, der rotierenden Sende-Einrichtung (22) das Spaltmaß des Radialspaltes (18) bestimmt und anzeigt.

2. Verfahren zur Bestimmung des Spaltmaßes eines Radialspaltes (18) zwischen rotierenden und drehfesten Bauteilen, insbesondere zwischen denen einer Strömungsmaschine(1),

   bei dem ein von einer an dem drehfesten Bauteil angeordneten Sende-Einrichtung (50) als Radiowelle abgestrahltes Ursprungssignal von einer auf dem rotierenden Bauteil angeordneten Reflektions-Struktur (52) verändert reflektiert wird,

   welches als Empfangssignal von einer auf dem drehfesten Bauteil angeordneten Empfangs-Einrichtung (50) empfangen und an eine Auswerte-Einrichtung (48) weitergeleitet wird und

welche Auswerte-Einrichtung (48) aus dem Empfangssignal dessen Veränderung gegenüber dem Ursprungssignal zur Bestimmung der Parameter der Bahnkurve, also zur Trajektoriebestimmung, der rotierenden Reflektions-Struktur (52) auswertet, um das Spaltmaß des Radialspaltes (18) zu bestimmen und anzuzeigen.

**3.** Verfahren nach Anspruch 1 oder 2,
bei dem die Signale hochfrequente elektromagnetische Radiowellen mit einer Frequenz im Bereich zwischen 0,5 MHz und 100GHz, insbesondere zwischen 1 GHz und 10 GHz sind.

**4.** Verfahren nach Anspruch 1 oder 2,
bei dem die Auswerte-Einrichtung (48) zur Trajektoriebestimmung die Feldstärke bzw. die Intensität des Empfangssignals auswertet.

**5.** Verfahren nach Anspruch 1 oder 2,
bei dem die Auswerte-Einrichtung (48) zur Trajektoriebestimmung die durch den Doppler-Effekt hervorgerufene Frequenzverschiebung des Empfangssignals auswertet.

**6.** Verfahren nach Anspruch 5,
bei dem die Auswerte-Einrichtung (48) die Dopplerfrequenz, d.h. die Differenzfrequenz des Empfangssignals, durch Frequenzdemodulation aus dem Empfangssignal herausfiltert.

**7.** Verfahren nach Anspruch 6,
bei dem das Spaltmaß des Radialspaltes (18) aus der zeitlichen Dauer der Änderung der Differenzfrequenz bestimmt wird.

**8.** Vorrichtung zum Durchführen des Verfahrens nach einem der Ansprüche 1 oder 3 bis 7, wobei die Ansprüche 3 bis 5 von Anspruch 1 abhängig sind, zur Bestimmung des Radialspaltes (18) zwischen rotierenden und drehfesten Bauteilen,
insbesondere zwischen denen einer Strömungsmaschine (1), mit einer auf dem rotierenden Bauteil angeordneten hochfrequente Radiowellen ausstrahlenden Sende-Einrichtung (22) und mit einer auf dem drehfesten Bauteil angeordneten hochfrequente Radiowellen empfangenden Empfangs-Einrichtung (24), welche mit einer Auswerte-Einrichtung (48) in Kommunikationsverbindung steht.

**9.** Vorrichtung nach Anspruch 8,
bei der die auf dem rotierenden Bauteil angeordnete Sende-Einrichtung (22) mittels einer induktiven Kopplung von dem drehfesten Bauteil aus mit Energie versorgbar ist.

**10.** Vorrichtung nach Anspruch 8,
bei der die auf dem rotierenden Bauteil angeordnete Sende-Einrichtung (22) durch eine auf dem rotierenden Bauteil angeordnete Batterie mit Energie versorgbar ist.

**11.** Vorrichtung zum Durchführen des Verfahrens nach einem der Ansprüche 2 bis 7, wobei die Ansprüche 3 bis 5 vom Anspruch 2 abhängig sind, zur Bestimmung des Radialspaltes (18) zwischen rotierenden und drehfesten Bauteilen,
insbesondere zwischen denen einer Strömungsmaschine (1), mit einer auf dem rotierenden Bauteil angeordneten Reflektions-Struktur (52), von der hochfrequente Radiowellen empfangbar und ausstrahlbar sind,
mit einer auf dem drehfesten Bauteil angeordneten hochfrequente Radiowellen aussendenden Sende- und hochfrequente Radiowellen empfangenden Empfangs-Einrichtung (50), welche mit einer Auswerte-Einrichtung (48) in Kommunikationsverbindung steht.

**12.** Vorrichtung nach Anspruch 11,
bei welcher die Reflektions-Struktur (52) durch einen auf einer isolierenden Trägerschicht angeordneten Dipol mit einer HF-Diode gebildet ist.

**13.** Vorrichtung nach Anspruch 12,
bei welcher der Dipol als nicht-linearer, passiver Dipol ausgebildet ist.

**14.** Vorrichtung nach einem der Ansprüche 11 bis 13,
bei der die Reflektions-Struktur (52) die zurückgesendete, reflektierte Radiowelle mit einer Frequenz ($f_S$) ausstrahlen kann, die doppelt so groß ist wie die Frequenz ($f_E$) des von ihr empfangenen Ursprungssignals.

**15.** Vorrichtung nach einem der Ansprüche 9 bis 13,
bei der Radiowellen mit einer Frequenz im Bereich von 0,5 MHz bis 100GHz von der Sendeeinrichtung ausstrahlbar und von der Empfangseinrichtung empfangbar sind.

**16.** Vorrichtung nach Anspruch 9 bis 15,
bei der die Sende- und Empfangs-Einrichtung jeweils eine Sende- und Empfangs-Antenne (51, 36, 40) umfassen, welche eine Punktstrahl- bzw. eine Linienstrahl-Charakteristik aufweist.

**17.** Vorrichtung nach einem der Ansprüche 9 bis 17,
bei der das rotierende Bauteil ein Rotor (9) einer Strömungsmaschine (1) und das drehfeste Bauteil eine dem Rotor (9) gegenüberliegende freistehende Leitschaufel (11) ist.

**18.** Verwendung einer Vorrichtung nach einem der Ansprüche 9 bis 14, oder 15 bis 17,
in einer Strömungsmaschine, insbesondere in einer stationären Gasturbine.

**Claims**

**1.** Method for determination of the gap size of a radial gap (18) between rotating and rotationally fixed components, in particular between those of a continuous-flow machine (1),
in which a source signal which is emitted as a radio wave from a transmitting device (22) that is arranged on the surface of the rotating component is received in a modified form by a receiving device (24), which is arranged on the rotationally fixed component, and is passed on to an evaluation device (48), which evaluation device (48) uses the received signal to determine the gap size of the radial gap (18), and to display this, by determination of the parameters of the path curve, that is to say by trajectory determination, of the rotating transmitting device (22).

**2.** Method for determination of the gap size of a radial gap (18) between rotating and rotationally fixed components, in particular between those of a continuous-flow machine (1),
in which a source signal which is emitted as a radio wave from a transmitting device (50) which is arranged on the rotationally fixed component is reflected in a modified form by a reflection structure (52) which is arranged on the rotating component,
which is received, as a received signal, by a receiving device (50) which is arranged on the rotationally fixed component and is passed on to an evaluation device (48),
and
which evaluation device (48) uses the received signal to evaluate the change in comparison to the source signal in order to determine the parameters of the path curve, that is to say by trajectory determination, of the rotating reflection structure (52), in order to determine and to display the gap size of the radial gap (18).

**3.** Method according to claim 1 or 2,
in which the signals are radio-frequency electromagnetic waves at a frequency in the range between 0.5 MHz and 100 GHz, in particular between 1 GHz and 10 GHz.

**4.** Method according to claim 1 or 2,
in which the evaluation device (48) evaluates the field strength and/or the intensity of the received signal for trajectory determination.

**5.** Method according to claim 1 or 2,
in which the evaluation device (48) evaluates the frequency shift in the received signal caused by the Doppler effect for trajectory determination.

**6.** Method according to claim 5,
in which the evaluation device (48) filters out the Doppler frequency, that is to say the difference frequency of the received signal, by frequency demodulation from the received signal.

**7.** Method according to claim 6,
in which the gap size of the radial gap (18) is determined from the time duration of the change in the difference frequency.

**8.** Apparatus for carrying out the method according to one of claims 1 or 3 to 7, which claims 3 to 5 are dependent from claim 1,

for determination of the radial gap (18) between rotating and rotationally fixed components,

in particular between those of a continuous-flow machine (1),

having a transmitting device (22), which emits radio-frequency waves and is arranged on the rotating component, and having a receiving device (24), which receives radio-frequency waves, is arranged on the rotationally fixed component and is connected to an evaluation device (48) for communication purposes.

**9.** Apparatus according to claim 8,

in which the transmitting device (22) which is arranged on the rotating component can be supplied with energy by means of an inductive coupling from the rotationally fixed component.

**10.** Apparatus according to claim 8,

in which the transmitting device (22) which is arranged on the rotating component can be supplied with energy by a battery which is arranged on the rotating component.

**11.** Apparatus for carrying out the method according to one of claims 2 to 7, which claims 3 to 5 are dependent from claim 2, for determination of the radial gap (18) between rotating and rotationally fixed components,

in particular between those of a continuous-flow machine (1),

having a reflection structure (52) which is arranged on the rotating component and can receive and transmit radio-frequency waves,

having a transmitting device which transmits radio-frequency waves and a receiving device (50) which receives radio-frequency waves which are arranged on the rotationally fixed component, which receiving device (50) is connected to an evaluation device (48) for communication purposes.

**12.** Apparatus according to claim 11,

in which the reflection structure (52) is formed by a dipole which is arranged on an insulating mount layer and has an RF diode.

**13.** Apparatus according to claim 12,

in which the dipole is in the form of a non-linear, passive dipole.

**14.** Apparatus according to one of claims 11 to 13,

in which the reflection structure (52) can transmit the reflected radio wave which is sent back, at a frequency ($f_S$) which is twice the frequency ($f_E$) of the source signal received by it.

**15.** Apparatus according to one of claims 9 to 13,

in which radio waves can be transmitted by the transmitting device and can be received by the receiving device at a frequency in the range from 0.5 MHz to 100 GHz.

**16.** Apparatus according to claims 9 to 15,

in which the transmitting and receiving device respectively have a transmitting and receiving antenna (51, 36, 40) which respectively has a point-beam or a linear-beam characteristic.

**17.** Apparatus according to one of claims 9 to 17,

in which the rotating component is a rotor (9) of a continuous-flow machine (1), and the rotationally fixed component is a free-standing stator blade (11) opposite the rotor (9).

**18.** Use of an apparatus according to one of claims 9 to 14, or 15 to 17,

in a continuous-flow machine, in particular in a stationary gas turbine.


**Revendications**

**1.** Procédé de détermination de la dimension d'un intervalle (18) radial entre des éléments constitutifs tournants ou fixes en rotation, notamment entre ceux d'une turbomachine (1),

dans lequel un signal d'origine émis sous la forme d'une onde radio par un dispositif (22) d'émission disposé à la surface de l'élément constitutif tournant est reçu de façon modifiée sur le dispositif (24) de réception disposé sur l'élément constitutif fixe en rotation et est acheminé à un dispositif (48) d'exploitation,
lequel dispositif (48) d'exploitation détermine et indique à partir du signal de réception par la détermination des paramètres de la trajectoire, donc par la détermination de trajectoire du dispositif (22) d'émission tournant, la dimension de l'intervalle (18) radial.

2. Procédé de détermination de la dimension d'un intervalle (18) radial entre des éléments constitutifs tournants ou fixes en rotation, notamment entre ceux d'une turbomachine (1),
dans lequel un signal d'origine émis sous la forme d'onde radio par un dispositif (50) d'émission disposé sur l'élément constitutif fixe en rotation est réfléchi de manière modifiée par une structure (52) de réflexion disposée sur l'élément constitutif tournant,
lequel signal est reçu comme signal de réception par un dispositif (50) de réception disposé sur l'élément constitutif fixe en rotation et est acheminé à un dispositif (48) d'exploitation et
lequel dispositif (48) d'exploitation exploite à partir du signal de réception sa modification par rapport au signal d'origine pour la détermination des paramètres de la trajectoire, donc pour la détermination de la trajectoire de la structure (52) de réflexion tournante, pour déterminer et indiquer la dimension de l'intervalle (18) radial.

3. Procédé suivant la revendication 1 ou 2,
dans lequel les signaux sont des ondes radioélectromagnétiques de haute fréquence, ayant une fréquence comprise entre 0,5 MHz et 100 GHz, notamment comprise entre 1 GHz et 10 GHz.

4. Procédé suivant la revendication 1 ou 2,
dans lequel le dispositif (48) d'exploitation exploite pour la détermination de la trajectoire les intensités de champ ou l'intensité du signal de réception.

5. Procédé suivant la revendication 1 ou 2,
dans lequel le dispositif (48) d'exploitation exploite pour la détermination de la trajectoire le décalage de fréquence du signal de réception provoqué par l'effet doppler.

6. Procédé suivant la revendication 5,
dans lequel le dispositif (48) d'exploitation filtre par démodulation de fréquence à partir du signal de réception, la fréquence doppler, c'est-à-dire la fréquence différentielle du signal de réception.

7. Procédé suivant la revendication 6,
dans lequel la dimension de l'intervalle (18) radial est déterminé à partir de la durée dans le temps de la variation de la fréquence différentielle.

8. Dispositif pour la mise en oeuvre du procédé suivant l'une des revendications 1 ou 3 à 7, les revendications 3 à 5 étant dépendantes de la revendication 1, pour la détermination de l'intervalle (18) radial entre des éléments constitutifs tournants et fixes en rotation, notamment entre ceux d'une turbomachine (1) comprenant un dispositif (22) d'émission émettant des ondes radio de haute fréquence et disposé sur l'élément constitutif tournant, et un dispositif (24) de réception recevant des ondes radio de haute fréquence disposé sur l'élément constitutif fixe en rotation et en liaison de communication avec un dispositif (48) d'exploitation.

9. Dispositif suivant la revendication 8,
dans lequel le dispositif (22) d'émission disposé sur l'élément constitutif tournant peut être alimenté en énergie au moyen d'un couplage inductif par l'élément constitutif fixe en rotation.

10. Dispositif suivant la revendication 8,
dans lequel le dispositif (22) d'émission disposé sur l'élément constitutif tournant peut être alimenté en énergie par une batterie disposée sur l'élément constitutif tournant.

11. Dispositif pour la mise en oeuvre du procédé suivant l'une des revendications 2 à 7, les revendications 3 à 5 dépendant de la revendication 2, de détermination de l'intervalle (18) radial entre des éléments constitutifs tournants et fixes en rotation, notamment entre ceux d'une turbomachine (1) comprenant une structure (52) de réflexion qui est disposée sur l'élément constitutif tournant par laquelle des ondes radio de haute fréquence peuvent être reçues et qui peut les émettre, un dispositif (50) d'émission disposé sur l'élément constitutif fixe en rotation et émettant des ondes radio de haute fréquence et recevant des ondes radio de haute fréquence, ce dispositif (50) étant en liaison de communication avec un dispositif (48) d'exploitation.

**12.** Dispositif suivant la revendication 11,
dans lequel la structure (52) de réflexion est formée par un dipôle qui est disposé sur une couche support isolante et qui à une diode HF.

**13.** Dispositif suivant la revendication 12,
dans lequel le dipôle est constitué sous la forme d'un dipôle passif non linéaire.

**14.** Dispositif suivant l'une des revendications 11 à 13,
dans lequel la structure (52) de réflexion peut émettre les ondes radio réfléchies renvoyées à une fréquence ($f_S$) qui est deux fois plus haute que la fréquence ($f_E$) du signal d'origine qu'elle reçoit.

**15.** Dispositif suivant l'une des revendications 9 à 13,
dans lequel des ondes radio ayant une fréquence comprise entre 0,5 MHz et 100 GHz peuvent être émises par le dispositif d'émission et peuvent être reçues par le dispositif de réception.

**16.** Dispositif suivant la revendication 9 à 15,
dans lequel le dispositif d'émission et de réception ont respectivement une antenne (51, 36, 40) d'émission et de réception qui a une caractéristique de rayonnement ponctuelle ou linéaire.

**17.** Dispositif suivant l'une des revendications 9 à 17,
dans lequel l'élément constitutif tournant est un rotor (9) d'une turbomachine (1) et l'élément constitutif fixe en rotation est une aube (11) directrice détachée par rapport au rotor (9).

**18.** Utilisation d'un dispositif suivant l'une des revendications 9 à 14 et 15 à 17 dans une turbomachine, notamment dans une turbine à gaz fixe.

FIG 1

$s=f(phi, s_0)$

FIG 2

Distanzfunktion s=s(phi)

Distanz [m]

Winkel phi [°]

## FIG 3

Geschwindigkeitsfunktion ds/d(phi)

## FIG 4

Dopplerfrequenz

## FIG 5

Dopplerfrequenz

## FIG 6

## FIG 7

22

Spannungs-versorgung

HF-Carrier

36

32          34

rotierendes System

24'

40

HF-Feldstärke-detektor

Auswerteeinheit

48'

40

FM-Demodulator

41

HF-Osc.

42

Auswerteeinheit

48"

Stationäres System

24"

EP 1 766 327 B1

# FIG 8

EP 1 766 327 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4384819 A
- US 4326804 A
- DE 2730508
- DE 19601225 C1
- EP 492381 A2